# EUROPEAN PATENT SPECIFICATION

(11) **EP 4 263 327 B1**
(45) Date of publication and mention of the grant of the patent: **08.10.2025**
(21) Application number: 20842649.4
(22) Date of filing: 21.12.2020
(51) Int. Cl.: B62D 17/00, G06N 20/00, G06N 3/092, G06N 3/08, G06N 7/01, G06N 3/045, G06N 3/006

(54) **SYSTEM AND METHOD FOR REINFORCEMENT LEARNING OF STEERING GEOMETRY**
SYSTEM UND VERFAHREN ZUM VERSTÄRKUNGSLERNEN EINER LENKGEOMETRIE
SYSTÈME ET PROCÉDÉ D'APPRENTISSAGE PAR RENFORCEMENT DE GÉOMÉTRIE DE DIRECTION

(43) Date of publication of application: 25.10.2023
(73) Proprietor: VOLVO TRUCK CORPORATION, 405 08 Göteborg (SE)
(72) Inventor: SUBRAMANIAN, Chidambaram, Greensboro, North Carolina 27407 (US)
(74) Representative: Valea AB
(86) International application number: PCT/US2020/066404
(87) International publication number: WO 2022/139790

(56) References cited:
- WO-A2-2019/241307
- US-A1- 2016 362 133
- US-A1- 2020 307 344

## Description

### BACKGROUND

### 1. Technical Field

The present disclosure relates to adjusting the steering geometry of a vehicle, and more specifically to using reinforcement learning in series with a neural network to determine when and how to adjust the steering geometry of the vehicle.

### 2. Introduction

Modern vehicles have superior control systems in the chassis in order to improve the performance and safety of the vehicle. However, the performance of the vehicle (such as fuel economy, vehicle stability, and tire wear) is highly dependent on the wheel alignment/steering geometry (such as camber and toe-in) for a specific application, driver behavior, and/or a specific driving cycle (such as acceleration versus steady velocity, maneuvering style, and/or braking style). The optimum steering geometry values to obtain necessary performance and meet legal regulations can therefore vary based on the driver, where the vehicle is operating, and what the vehicle is being used for.

Document US2016/362133A1 is regarded as being the prior art closest to the subject-matter of claims 1, 9 and 17 and discloses a method comprising: receiving, at a processor aboard a vehicle, vehicle information associated with ongoing movement of the vehicle and providing an output comprising a wheel alignment signal.

### SUMMARY

Additional features and advantages of the disclosure will be set forth in the description that follows, and in part will be understood from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

Disclosed are systems, methods, and non-transitory computer-readable storage media which provide a technical solution to the technical problem described. A method for performing the concepts disclosed herein can include: receiving, at a processor aboard a vehicle, vehicle information associated with ongoing movement of the vehicle; executing, via the processor, a reinforcement learning model, wherein: inputs to the reinforcement learning model comprise: the vehicle information; and at least one feedback item, the at least one feedback item indicating if a previous output of the reinforcement learning model was correct; outputs of the reinforcement learning model comprise: a current driving cycle of the vehicle; and a current application of the vehicle; executing, via the processor, a machine learning model, wherein: inputs to the machine learning model comprise: the outputs of the reinforcement learning model; and the vehicle information; and output of the machine learning model comprises a wheel alignment signal.

A vehicle configured to perform the concepts disclosed herein can include: a processor; a plurality of sensors; a non-transitory computer-readable storage medium having instructions stored which, when executed by the processor, cause the processor to perform operations comprising: receiving, from the plurality of sensors, vehicle information associated with ongoing movement of the vehicle; executing a reinforcement learning model, wherein: inputs to the reinforcement learning model comprise: the vehicle information; and at least one feedback item, the at least one feedback item indicating if a previous output of the reinforcement learning model was correct; outputs of the reinforcement learning model comprise: a current driving cycle of the vehicle; and a current application of the vehicle; executing a machine learning model, wherein: inputs to the machine learning model comprise: the outputs of the reinforcement learning model; and the vehicle information; and output of the machine learning model comprises a wheel alignment signal.

A non-transitory computer-readable storage medium configured as disclosed herein can have instructions stored which, when executed by a computing device, cause the computing device to perform operations which include: receiving, at the processor, vehicle information associated with ongoing movement of the vehicle; executing a reinforcement learning model, wherein: inputs to the reinforcement learning model comprise: the vehicle information; and at least one feedback item, the at least one feedback item indicating if a previous output of the reinforcement learning model was correct; outputs of the reinforcement learning model comprise: a current driving cycle of the vehicle; and a current application of the vehicle; executing a machine learning model, wherein: inputs to the machine learning model comprise: the outputs of the reinforcement learning model; and the vehicle information; and output of the machine learning model comprises a wheel alignment signal.

### BRIEF DESCRIPTION OF THE DRAWINGS

FIG. 1A illustrates a first example driving cycle;
FIG. 1B illustrates a second example driving cycle;
FIG. 2 illustrates an example of reinforcement learning and a neural network being used to determine optimal wheel alignment;
FIG. 3 illustrates an example of recommending changes to wheel alignment or automatically initiating changes to wheel alignment using actuators;
FIG. 4 illustrates an example method embodiment; and
FIG. 5 illustrates an example computer system.

### DETAILED DESCRIPTION

Various embodiments of the disclosure are described in detail below. While specific implementations are described, it should be understood that this is done for illustration purposes only. Other components and configurations may be used without parting from the scope of the claims.

Disclosed herein are various examples and embodiments for defining an optimum steering geometry based on a vehicle's drive cycle and the driver's driving style. Consider the following example: As a truck driver delivering ore from a mine drives from the mine to a foundry, the truck changes surfaces (dirt to asphalt to cement) and driving conditions (slow crawl with multiple turns at the mine, fast and straight on a highway, stop and go traffic before reaching the foundry). For optimal comfort, fuel efficiency, tire wear, performance, or other desired vehicle applications, each of the conditions through which the truck will pass could have distinct optimal steering geometries. In addition, how the driver operates the vehicle, and the driver's driving style or tendencies, could affect the optimal steering geometries.

To determine the optimum steering geometry for any given scenario, an artificial neural network can be created using known vehicle drive cycles, driving styles, and steering geometries. This neural network can then be converted to computer executable code as a machine learning model, then deployed on a vehicle. When in operation, the vehicle can execute a reinforcement learning model, where inputs from the vehicle (from vehicle sensors) can allow the reinforcement learning model to determine a current driving cycle of the vehicle and the application for which the vehicle is being used. The outputs of the reinforcement learning can be provided to the machine learning model to determine the optimum steering geometry based on how the vehicle is currently being operated. In configurations where the vehicle is configured with actuators to self-modify steering geometry components during operation, the optimum steering geometry can result in various components being modified or changed by the actuators during vehicle operation. In configurations in which vehicles lack self-modification capabilities, the optimum steering geometry can be communicated to a technician or other individual, who can then manually modify the steering geometry.

The data from the vehicle, collected by the vehicle sensors, can include data regarding the vehicle velocity, vehicle acceleration, wheel speeds, steering angle, throttle activation, brake pedal activation, axle load, position (via Global Positioning System (GPS)), suspension articulation data, tire pressure(s), road surface type over which the vehicle is currently traversing, and/or current steering input. Other exemplary data which can be collected could include slip data for the various wheels, braking capacity, angle of ascent/descent, general engine data, road conditions (wet, dry, icy, etc.), acceleration/deceleration patterns over a period of time, and/or any other data conveyed via the Controller Area Network (CAN) bus within a vehicle.

Any combination of the collected vehicle data can be input into a reinforcement learning model executed by a processor of the vehicle. The reinforcement learning model can also be a neural network, configured in a similar to other neural networks described herein. One example output of the reinforcement learning model can be a driving cycle of the vehicle, such as "transient" (where the vehicle is undergoing many changes, typical in stop and go traffic or off-roading), or "modal" (where the vehicle is going long periods of time at a constant speed). Another example output of the reinforcement learning model can be an application of the vehicle, such as if the vehicle is being used to transport goods, ferry passengers, drive in an urban environment, drive off-road, etc.

The outputs of the reinforcement learning model can be specific to the driver of the vehicle. For example, as the vehicle sensors collect data and the reinforcement learning model analyzes that data, the driver of the vehicle can confirm (or reject) the driving cycle and/or vehicle application of the vehicle. Over time, as the system collects additional data from the driver, the system can modify the reinforcement learning model such that the driving cycle/vehicle application outputs are based on the feedback provided by the vehicle driver. In this manner, the reinforcement learning model adapts and self-modifies over time, producing more accurate predictions of the driving cycle and/or vehicle application. The system can also use GPS data, known road surface data, etc., to cross-check the feedback received by the vehicle driver.

The outputs of the reinforcement learning model are also used as inputs to a machine learning model based on a neural network. Additional inputs to the machine learning model can also include the vehicle sensor data which was used as inputs to the reinforcement learning model. In some configurations, the vehicle sensor data input to the machine learning model can be identical to the inputs of the reinforcement learning model, whereas in other configurations the vehicle sensor data input to the machine learning model can be a portion or subset of the vehicle sensor data input to the inputs of the reinforcement learning model. In still other configurations, the vehicle sensor data input to the machine learning model can include vehicle data which was not used as an input to the reinforcement learning model. For instance, in some configurations, an additional input can include a driver (or other human being) preference on how the vehicle should be optimized. In such cases, the driver could indicate that they desire that wheel alignment of the vehicle be configured to optimize the fuel economy of the vehicle. Other examples of driver preferences could be to minimize the wear on the tires (thereby optimizing tire wear), optimizing ride comfort, or optimizing vehicle performance for a given scenario (such as optimizing for cornering versus optimizing for lack of cornering). While in this example the system can be configured to take a single driver preference, in other configurations the inputs to the second machine learning model can also include multiple driver preferences, or ranked driver preferences.

The machine learning model can then output optimal wheel alignment values (such as the camber, caster, and/or toe of a wheel) based on the inputs provided to the machine learning model. In some circumstances, the machine learning model outputs values for all possible wheel alignment components on a given vehicle each time the algorithm is executed, whereas in other circumstances the algorithm only outputs wheel alignment values which vary from a current vehicle configuration. For example, if camber, caster, and toe corresponded to all of the wheel alignment components within a vehicle, in some configurations the machine learning model may output an optimal camber of the wheel(s) based on the inputs provided to the algorithm, an optimal caster, as well as an optimal toe angle, each time the machine learning model is executed. In another configuration, the machine learning model may only output values where the optimum configuration varies from a current component configuration, such that even if there were many possible component values which could be output, only a portion of those have corresponding outputs at a given time.

Where the vehicle is equipped with actuators to adjust steering geometry components, the wheel alignment output of the machine learning model can be transmitted to one or more actuators corresponding to the respective output, such that the actuators adjust the vehicle steering geometry while the vehicle is in operation. In some configurations, where the vehicle is not configured to auto-adjust via actuators while operating, the outputs of the machine learning model can be presented to the driver or to a technician, who can then make manual adjustments to the vehicle at their judgment. Such output can, for example, be displayed on the vehicle dashboard, via a smartphone application, or by any other effective vehicle-to-human communication mechanism.

In configurations where the vehicle is configured to auto-adjust while operating, the outputs of the machine learning model can be provided to actuators and/or other control systems within the vehicle. The actuators can then adjust the vehicle components according to the adjustment values output by the machine learning model, and sensors can compare the adjusted component values to the optimal/desired component values output by the machine learning model. If adjusted component values detected do not match the desired values output by the machine learning model additional adjustments may be necessary.

As an example of how to train the neural network which in turn is converted to executable code as a machine learning model, a vehicle manufacturer or other entity can collect known data (corresponding to the vehicle information and sensor data used as inputs to the reinforcement learning model, such as: vehicle velocity, wheel speeds, steering angle, throttle, brake pedal depression, axle load data, GPS location, and/or suspension articulation data). This feature data can be collected from multiple vehicles under multiple conditions, preferably with the amount of data collected from each vehicle being at least thirty minutes of operation, though the amount of data can vary.

In this example, (1) the known feature data, (2) the corresponding, known driving cycles, (3) the corresponding, known vehicle applications, and (4) known wheel alignment component values, can be compared via a sensitivity analysis, resulting in correlations between (1) the known feature data, (2) the corresponding, known driving cycles, (3) the corresponding, known vehicle applications, and (4) known wheel alignment component values. For example, the sensitivity analysis can execute models (such as a one-at a time test, a derivative-based local method, regression analysis, variance-based method, screening, scatter plots, etc.) to define how a given input/variable affects the likelihood of a specific condition (such as the X, Y, Z dimensions) in the wheel alignment/steering geometry being determined. More specifically, the system can receive the known vehicle sensor data collected, driving cycles, vehicle applications, and determine how they affect the known wheel alignments. The correlation outputs of the sensitivity analysis define the likelihood of a given variable affecting one or more of the wheel alignment components.

The outputs of the sensitivity analysis, as well the sensitivity analysis training data, can then be used by to construct a neural network. For example, the correlations and test data associated with the sensitivity analysis can be input into Python, MatLab^{®}, or other development software configured to construct neural network based on factor-specific data. Depending on the specific scenario, users can adjust the neural network construction by selecting from optimization methods including (but not limited to) the least-squares method, the Levenberg-Marquardt algorithm, the gradient descent method, or the Gauss-Newton method. The neural network can make predictions of the optimal wheel alignment given input variables corresponding to the same data which were used to train the neural network. The neural network can then be converted to machine code and uploaded into memory, where upon execution by a processor the neural network operates as a machine learning model.

With respect to the reinforcement learning model, the neural network can be configured in a similar manner. The initial data can be driving data from various driving conditions, such as mining, long-haul, street, refuse, etc. The data from these driving conditions are evaluated via sensitivity analysis, and the resulting correlations can be used to construct the neural network for the reinforcement learning model. After initial constructions, the reinforcement learning model can operate based on a reward system. For example, after a day of driving feedback from the driver can be collected. The system would ask the driver a question regarding the driving conditions of the day, then use the answers the driver provides to determine if the model is accurately predicting driving conditions. For example, the system may ask the driver if they drove on rough surfaces with hard turns and an average velocity of 10 kilometers/hour, which is what the system predicted occurred. If the driver answers yes, the system gets a "reward," meaning that the system further maintain the tune the model in a similar manner going forward. If the driver answers no, the system will tune the model in a different direction until the driver begins answering "True" or "Yes" to the questions presented. More specifically, the Yes/No or True/False answers to the questions can modify the weights and biases of the connections between the nodes in the reinforcement learning model neural network, where a yes/true can add weight to an existing connection, and a no/false can reduce weight of an existing connection. Questions can be presented to the drivers on a periodic basis (everyday, every week, etc.), when a change in conditions is detected (*e.g.,* a change from dirt to asphalt), and/or when a certain amount of time driving has occurred (*e.g*. every four hours of driving).

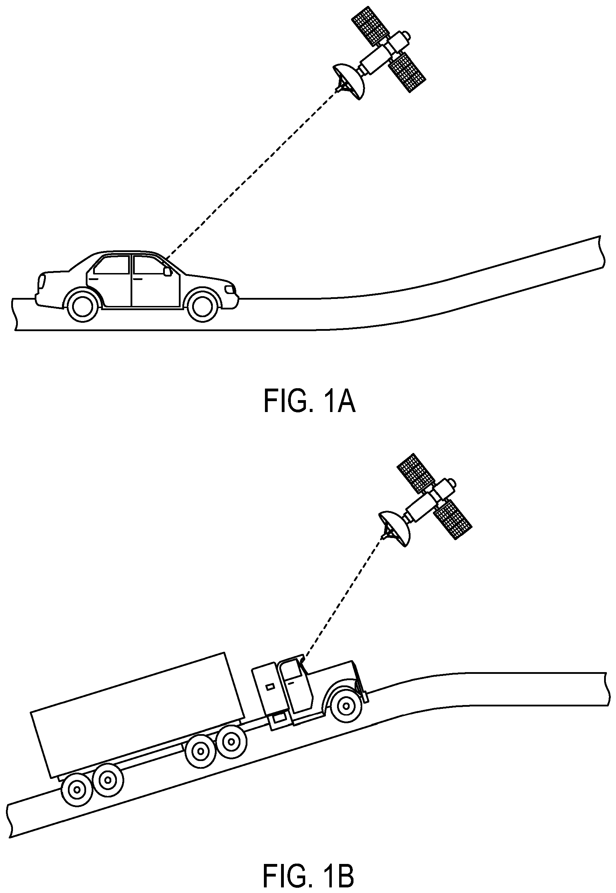

FIG. 1A illustrates a first example driving cycle, with a vehicle driving along a flat road. At least one GPS satellite is providing location coordinates to the vehicle. In this case, the driving cycle of the vehicle could be identified, by the reinforcement learning model, as modal, without frequent changes to the operation of the vehicle.

FIG. 1B illustrates a second example driving cycle, with a vehicle ascending a hill. In this case, the driving cycle of the vehicle could be identified, by the reinforcement learning model, as transient, with frequent changes to the operation of the vehicle due to acceleration, braking, etc.

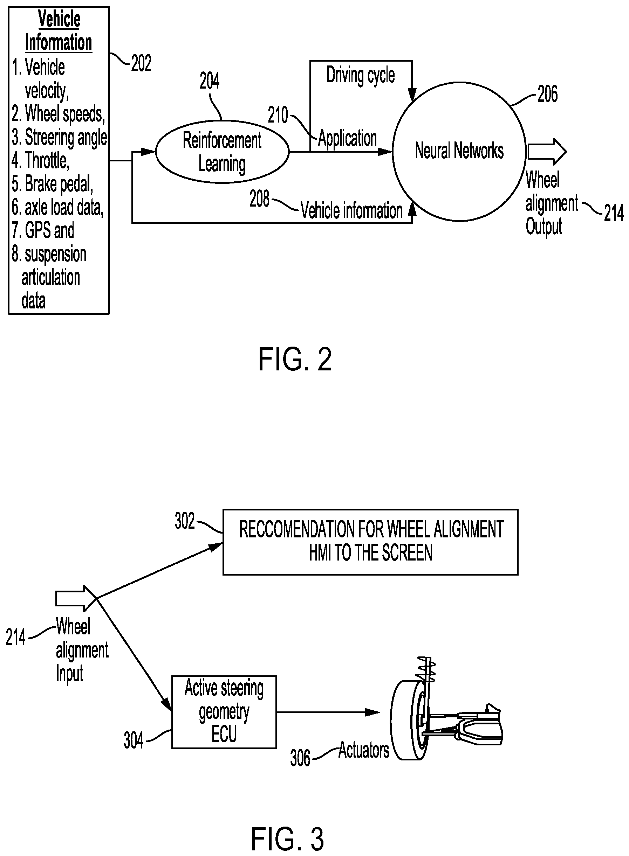

FIG. 2 illustrates an example of reinforcement learning 204 and a neural network 206 being used to determine optimal wheel alignment 214. In this example, vehicle information 202, such as vehicle velocity, wheel speeds, steering angle, throttle, brake pedal depression, axle load data, GPS information, and/or suspension articulation data is collected by vehicle sensors. The vehicle information 202 is input into a reinforcement learning model 204, which identifies and outputs predictions of a current driving cycle 212 and a current application 210 of the vehicle. The predicted driving cycle 212, the predicted application 210, and the vehicle information 202, 208 are input into a machine learning model based on a neural network 206. The output of the machine learning model/neural network 206 is a wheel alignment output 214, which identifies optimum values of vehicle components associated with the vehicle's steering geometry. For example, the wheel alignment output 214 can define optimum values for the camber, castor, and/or toe-in associated with the wheel position of one or more tires of the vehicle. In some configurations, the wheel alignment output 214 can define how to modify the vehicle components, whereas in other configurations the wheel alignment output 214 can be received by a control system, which in turn determines how to modify vehicle components (if necessary) based on the wheel alignment output 214 and current configuration values of the vehicle components.

In some cases, there can be a feedback loop resulting in multiple iterations to place the vehicle components within threshold ranges. For example, the wheel alignment output 214 can cause adjustment of a vehicle component associated with the steering geometry of the vehicle via an actuator. After the adjustment, a vehicle sensor can detect the new position or value associated with the vehicle component, and if necessary cause another adjustment to occur to fall within a threshold range of the optimum wheel alignment output 214 generated by the neural network 206. This process can continue indefinitely until the vehicle component value falls within a predetermined range of the associated wheel alignment output 214 value. The threshold range can, in some configurations, be fixed (e.g., plus or minus five units from the wheel alignment output 214 value). In other configurations the threshold range can vary based on the vehicle information 202 and/or the wheel alignment output 214 value.

FIG. 3 illustrates an example of recommending changes to wheel alignment 302 or automatically initiating changes to wheel alignment using actuators 306. In vehicles configured with an active steering geometry ECU (Engine Control Unit) 304, the wheel alignment output 214 of the neural network 206 illustrated in FIG. 2 can be used as an input to the active steering geometry ECU 304. The active steering geometry ECU 304 can then define adjustments to the vehicle components to adjust the vehicle according to the wheel alignment inputs 214. The adjustments can, for example, cause actuators 306 to adjust the camber, castor, and toe-in of one or more tires on the vehicle.

In configurations which do not have an active steering geometry ECU 304 and/or actuators 306, the output of the neural network (the wheel alignment input 214) can be a recommendation for wheel alignment HMI (Human Machine Interface) to a screen 302. For example, the wheel alignment input 214 can result in a light or notification on the vehicle dashboard. The driver can then initiate a manual modification of the vehicle component. In other configurations, the recommendation 302 can be transmitted or otherwise communicated to a technician, who can then perform the manual modification.

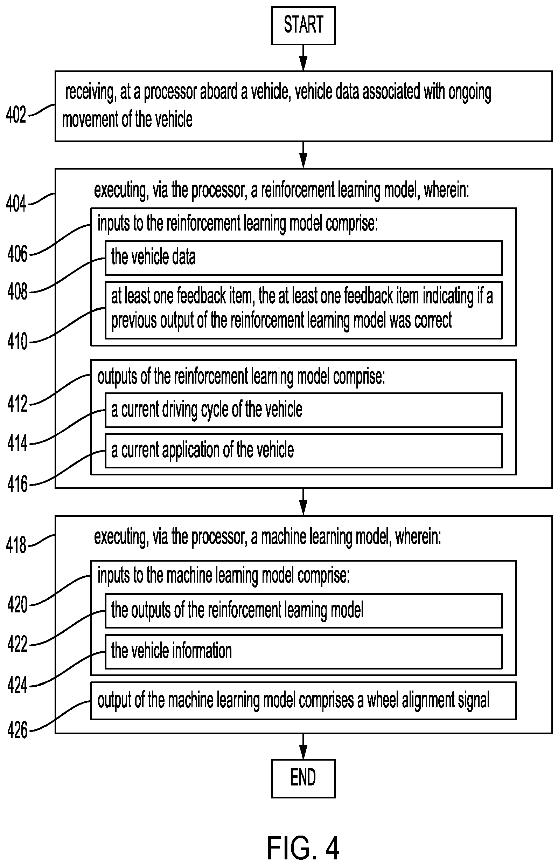

FIG. 4 illustrates an example method embodiment. The system performing the illustrated method can receive, at a processor aboard a vehicle, vehicle information associated with ongoing movement of the vehicle (402). The system can then execute, via the processor, a reinforcement learning model (404), where inputs to the reinforcement learning model include (406): the vehicle information (408); and at least one feedback item, the at least one feedback item indicating if a previous output of the reinforcement learning model was correct (410). The outputs of the reinforcement learning model can include (412): a current driving cycle of the vehicle (414); and a current application of the vehicle (416). The system can then execute, via the processor, a machine learning model (418), wherein: inputs to the machine learning model comprise (420): the outputs of the reinforcement learning model (422); and the vehicle information (424). The outputs of the machine learning model can comprise a wheel alignment signal (426).

In some configurations, the method illustrated in FIG. 4 can further include: transmitting, from the processor to at least one actuator of the vehicle, the wheel alignment signal; and modifying, via the at least one actuator based on the wheel alignment signal, at least one component of the vehicle, resulting in a modified steering geometry of the vehicle.

In some configurations, the method illustrated in FIG. 4 can further include: displaying a notification to manually modify a steering geometry of the vehicle based on the wheel alignment signal.

In some configurations, the vehicle information can include: a velocity of the vehicle, wheel speeds of the vehicle, a steering angle of the vehicle, a throttle of the vehicle, a brake pedal status of the vehicle, axle load data of the vehicle, GPS (Global Positioning System) data of the vehicle, and/or suspension articulation data of the vehicle.

In some configurations, the machine learning model can be generated by: performing a sensitivity analysis which identifies correlations between known values of vehicle data associated with the vehicle information, known values of steering geometry component, known driving cycles, and known vehicle applications; forming, via a computing device, a neural network using the correlations; and converting, via the computing device, the neural network to computer executable code, resulting in the machine learning model.

In some configurations, the at least one feedback item can include an indication of accuracy from a driver of the vehicle regarding previous outputs of the reinforcement learning model. In some instances, this feed back can be a binary "Yes or No" response, whereas in other the driver can provide the correct values of the vehicle application and/or driving cycle.

In some configurations the at least one feedback item can include a comparison of actual GPS data to regarding previous outputs of the reinforcement learning model.

In some configurations, the current driving cycle of the vehicle can be one of a transient driving cycle and a modal driving cycle.

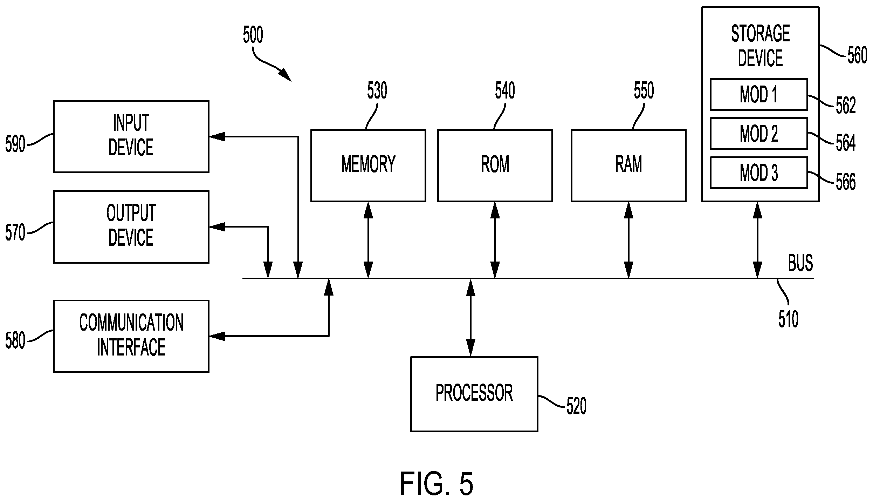

With reference to FIG. 5, an exemplary system includes a general-purpose computing device 500, including a processing unit (CPU or processor) 520 and a system bus 510 that couples various system components including the system memory 530 such as read-only memory (ROM) 540 and random access memory (RAM) 550 to the processor 520. The system 500 can include a cache of high-speed memory connected directly with, in close proximity to, or integrated as part of the processor 520. The system 500 copies data from the memory 530 and/or the storage device 560 to the cache for quick access by the processor 520. In this way, the cache provides a performance boost that avoids processor 520 delays while waiting for data. These and other modules can control or be configured to control the processor 520 to perform various actions. Other system memory 530 may be available for use as well. The memory 530 can include multiple different types of memory with different performance characteristics. It can be appreciated that the disclosure may operate on a computing device 500 with more than one processor 520 or on a group or cluster of computing devices networked together to provide greater processing capability. The processor 520 can include any general purpose processor and a hardware module or software module, such as module 1 562, module 2 564, and module 3 566 stored in storage device 560, configured to control the processor 520 as well as a special-purpose processor where software instructions are incorporated into the actual processor design. The processor 520 may essentially be a completely self-contained computing system, containing multiple cores or processors, a bus, memory controller, cache, etc. A multi-core processor may be symmetric or asymmetric.

The system bus 510 may be any of several types of bus structures including a memory bus or memory controller, a peripheral bus, and a local bus using any of a variety of bus architectures. A basic input/output (BIOS) stored in ROM 540 or the like, may provide the basic routine that helps to transfer information between elements within the computing device 500, such as during start-up. The computing device 500 further includes storage devices 560 such as a hard disk drive, a magnetic disk drive, an optical disk drive, tape drive or the like. The storage device 560 can include software modules 562, 564, 566 for controlling the processor 520. Other hardware or software modules are contemplated. The storage device 560 is connected to the system bus 510 by a drive interface. The drives and the associated computer-readable storage media provide nonvolatile storage of computer-readable instructions, data structures, program modules and other data for the computing device 500. In one aspect, a hardware module that performs a particular function includes the software component stored in a tangible computer-readable storage medium in connection with the necessary hardware components, such as the processor 520, bus 510, display 570, and so forth, to carry out the function. In another aspect, the system can use a processor and computer-readable storage medium to store instructions which, when executed by the processor, cause the processor to perform a method or other specific actions. The basic components and appropriate variations are contemplated depending on the type of device, such as whether the device 500 is a small, handheld computing device, a desktop computer, or a computer server.

Although the exemplary embodiment described herein employs the hard disk 560, other types of computer-readable media which can store data that are accessible by a computer, such as magnetic cassettes, flash memory cards, digital versatile disks, cartridges, random access memories (RAMs) 550, and read-only memory (ROM) 540, may also be used in the exemplary operating environment. Tangible computer-readable storage media, computer-readable storage devices, or computer-readable memory devices, expressly exclude media such as transitory waves, energy, carrier signals, electromagnetic waves, and signals per se.

To enable user interaction with the computing device 500, an input device 590 represents any number of input mechanisms, such as a microphone for speech, a touch-sensitive screen for gesture or graphical input, keyboard, mouse, motion input, speech and so forth. An output device 570 can also be one or more of a number of output mechanisms known to those of skill in the art. In some instances, multimodal systems enable a user to provide multiple types of input to communicate with the computing device 500. The communications interface 580 generally governs and manages the user input and system output. There is no restriction on operating on any particular hardware arrangement and therefore the basic features here may easily be substituted for improved hardware or firmware arrangements as they are developed.

Use of language such as "at least one of X, Y, and Z," "at least one of X, Y, or Z," "at least one or more of X, Y, and Z," "at least one or more of X, Y, or Z," "at least one or more of X, Y, and/or Z," or "at least one of X, Y, and/or Z," are intended to be inclusive of both a single item (e.g., just X, or just Y, or just Z) and multiple items (e.g., {X and Y}, {X and Z}, {Y and Z}, or {X, Y, and Z}). The phrase "at least one of" and similar phrases are not intended to convey a requirement that each possible item must be present, although each possible item may be present.

The various embodiments described above are provided by way of illustration only and should not be construed to limit the scope of the disclosure. Various modifications and changes may be made to the principles described herein without following the example embodiments and applications illustrated and described herein, and without departing from the scope of the claims.

## Claims

1. A method comprising:
receiving, at a processor aboard a vehicle, vehicle information associated with ongoing movement of the vehicle;
executing, via the processor, a reinforcement learning model, wherein:
inputs to the reinforcement learning model comprise:
the vehicle information; and
at least one feedback item, the at least one feedback item indicating if a previous output of the reinforcement learning model was correct;
outputs of the reinforcement learning model comprise:
a current driving cycle of the vehicle; and
a current application of the vehicle;
executing, via the processor, a machine learning model, wherein:
inputs to the machine learning model comprise:
the outputs of the reinforcement learning model; and
the vehicle information; and
output of the machine learning model comprises a wheel alignment signal.

2. The method of claim 1, further comprising:
transmitting, from the processor to at least one actuator of the vehicle, the wheel alignment signal; and
modifying, via the at least one actuator based on the wheel alignment signal, at least one component of the vehicle, resulting in a modified steering geometry of the vehicle.

3. The method of claim 1, further comprising:
displaying a notification to manually modify a steering geometry of the vehicle based on the wheel alignment signal.

4. The method of claim 1, wherein the vehicle information comprises:
a velocity of the vehicle;
wheel speeds of the vehicle;
a steering angle of the vehicle;
a throttle of the vehicle;
a brake pedal status of the vehicle;
axle load data of the vehicle;
GPS (Global Positioning System) data of the vehicle; and
suspension articulation data of the vehicle.

5. The method of claim 1, wherein the machine learning model is generated by:
performing a sensitivity analysis which identifies correlations between known values of vehicle data associated with the vehicle information, known values of steering geometry component, known driving cycles, and known vehicle applications;
forming, via a computing device, a neural network using the correlations; and
converting, via the computing device, the neural network to computer executable code, resulting in the machine learning model.

6. The method of claim 1, wherein the at least one feedback item comprises an indication of accuracy from a driver of the vehicle regarding previous outputs of the reinforcement learning model.

7. The method of claim 1, wherein the at least one feedback item comprises a comparison of actual GPS data to regarding previous outputs of the reinforcement learning model.

8. The method of claim 1, wherein the current driving cycle of the vehicle comprises one of:
a transient driving cycle; and
a modal driving cycle.

9. A vehicle comprising:
a processor;
a plurality of sensors;
a non-transitory computer-readable storage medium having instructions stored which, when executed by the processor, cause the processor to perform operations comprising:
receiving, from the plurality of sensors, vehicle information associated with ongoing movement of the vehicle;
executing a reinforcement learning model, wherein:
inputs to the reinforcement learning model comprise:
the vehicle information; and
at least one feedback item, the at least one feedback item indicating if a previous output of the reinforcement learning model was correct;
outputs of the reinforcement learning model comprise:
a current driving cycle of the vehicle; and
a current application of the vehicle;
executing a machine learning model, wherein:
inputs to the machine learning model comprise:
the outputs of the reinforcement learning model; and
the vehicle information; and
output of the machine learning model comprises a wheel alignment signal.

10. The vehicle of claim 9, further comprising:
at least one actuator associated with wheel alignment of the vehicle, and
wherein the non-transitory computer-readable storage medium stores additional instructions which, when executed by the processor, cause operations comprising:
transmitting, from the processor to the at least one actuator of the vehicle, the wheel alignment signal; and
modifying, via the at least one actuator based on the wheel alignment signal, at least one component of the vehicle, resulting in a modified steering geometry of the vehicle.

11. The vehicle of claim 9, the non-transitory computer-readable storage medium having additional instructions stored which, when executed by the processor, cause the processor to perform operations comprising:
displaying a notification to manually modify a steering geometry of the vehicle based on the wheel alignment signal.

12. The vehicle of claim 9, wherein the vehicle information comprises:
a velocity of the vehicle;
wheel speeds of the vehicle;
a steering angle of the vehicle;
a throttle of the vehicle;
a brake pedal status of the vehicle;
axle load data of the vehicle;
GPS (Global Positioning System) data of the vehicle; and
suspension articulation data of the vehicle.

13. The vehicle of claim 9, wherein the machine learning model is generated by:
performing a sensitivity analysis which identifies correlations between known values of vehicle data associated with the vehicle information, known values of steering geometry component, known driving cycles, and known vehicle applications;
forming, via a computing device, a neural network using the correlations; and
converting, via the computing device, the neural network to computer executable code, resulting in the machine learning model.

14. The vehicle of claim 9, wherein the at least one feedback item comprises an indication of accuracy from a driver of the vehicle regarding previous outputs of the reinforcement learning model.

15. The vehicle of claim 9, wherein the at least one feedback item comprises a comparison of actual GPS data to regarding previous outputs of the reinforcement learning model.

## Patentansprüche

1. Verfahren umfassend:
Empfangen von Fahrzeuginformationen im Zusammenhang mit der laufenden Bewegung des Fahrzeugs an einem Prozessor an Bord eines Fahrzeugs;
Ausführen eines Verstärkungslernmodells über den Prozessor, wobei:
Eingaben in das Verstärkungslernmodell umfassen:
die Fahrzeuginformationen; und
mindestens ein Rückkopplungselement, wobei das mindestens eine Rückkopplungselement angibt, ob eine vorherige Ausgabe des Verstärkungslernmodells korrekt war;
Ausgaben des Verstärkungslernmodells umfassen:
einen aktuellen Fahrzyklus des Fahrzeugs; und
eine aktuelle Anwendung des Fahrzeugs;
Ausführen eines maschinellen Lernmodells über den Prozessor, wobei:
Eingaben in das maschinelle Lernmodell umfassen:
die Ausgaben des Verstärkungslernmodells; und
die Fahrzeuginformationen; und
Ausgaben des maschinellen Lernmodells ein Radausrichtungssignal umfassen.

2. Verfahren nach Anspruch 1, ferner umfassend:
Übertragen des Radausrichtungssignals von dem Prozessor an mindestens einen Aktuator des Fahrzeugs; und
Modifizieren mindestens einer Komponente des Fahrzeugs über den mindestens einen Aktuator basierend auf dem Radausrichtungssignal, was zu einer modifizierten Lenkgeometrie des Fahrzeugs führt.

3. Verfahren nach Anspruch 1, ferner umfassend:
Anzeigen einer Benachrichtigung zum manuellen Ändern einer Lenkgeometrie des Fahrzeugs basierend auf dem Radausrichtungssignal.

4. Verfahren nach Anspruch 1, wobei die Fahrzeuginformationen ferner umfassen:
eine Geschwindigkeit des Fahrzeugs;
Radgeschwindigkeiten des Fahrzeugs;
einen Lenkwinkel des Fahrzeugs;
eine Drosselklappe des Fahrzeugs;
einen Bremspedalstatus des Fahrzeugs;
Achslastdaten des Fahrzeugs;
GPS-Daten (Global Positioning System-Daten) des Fahrzeugs; und
Aufhängungsgelenkdaten des Fahrzeugs.

5. Verfahren nach Anspruch 1, wobei das maschinelle Lernmodell wie folgt generiert wird:
Durchführen einer Sensitivitätsanalyse, die Korrelationen zwischen bekannten Werten von Fahrzeugdaten, die den Fahrzeuginformationen zugeordnet sind, bekannten Werten von Lenkgeometriekomponenten, bekannten Fahrzyklen und bekannten Fahrzeuganwendungen identifiziert;
Bilden eines neuronalen Netzwerks unter Verwendung der Korrelationen über eine Rechenvorrichtung; und
Konvertieren des neuronalen Netzwerks über die Rechenvorrichtung in computerausführbaren Code, wodurch das maschinelle Lernmodell entsteht.

6. Verfahren nach Anspruch 1, wobei das mindestens eine Rückkopplungselement eine Genauigkeitsangabe von einem Fahrer des Fahrzeugs in Bezug auf vorherige Ausgaben des Verstärkungslernmodells umfasst.

7. Verfahren nach Anspruch 1, wobei das mindestens eine Rückkopplungselement einen Vergleich der tatsächlichen GPS-Daten mit früheren Ausgaben des Verstärkungslernmodells umfasst.

8. Verfahren nach Anspruch 1, wobei der aktuelle Fahrzyklus des Fahrzeugs eines umfasst von:
einem transienten Fahrzyklus; und
einem modalen Fahrzyklus.

9. Fahrzeug, umfassend:
einen Prozessor;
eine Vielzahl von Sensoren;
ein nichtflüchtiges computerlesbares Speichermedium mit gespeicherten Anweisungen, die, wenn sie von dem Prozessor ausgeführt werden, den Prozessor veranlassen, Operationen durchzuführen, die Folgendes umfassen:
Empfangen von Fahrzeuginformationen, die der laufenden Bewegung des Fahrzeugs zugeordnet sind, von der Vielzahl von Sensoren;
Ausführen eines Verstärkungslernmodells, wobei:
Eingaben in das Verstärkungslernmodell umfassen:
die Fahrzeuginformationen; und
mindestens ein Rückkopplungselement, wobei das mindestens eine Rückkopplungselement angibt, ob eine vorherige Ausgabe des Verstärkungslernmodells korrekt war;
Ausgaben des Verstärkungslernmodells umfassen:
einen aktuellen Fahrzyklus des Fahrzeugs; und
eine aktuelle Anwendung des Fahrzeugs;
Ausführen eines maschinellen Lernmodells, wobei:
Eingaben in das maschinelle Lernmodell umfassen:
die Ausgaben des Verstärkungslernmodells; und
die Fahrzeuginformationen; und
Ausgaben des maschinellen Lernmodells ein Radausrichtungssignal umfassen.

10. Verfahren nach Anspruch 9, ferner umfassend:
mindestens einen Aktuator, der der Radausrichtung des Fahrzeugs zugeordnet ist, und
wobei das nichtflüchtige computerlesbare Speichermedium zusätzliche Anweisungen speichert, die bei Ausführung durch den Prozessor Operationen veranlassen, umfassend:
Übertragen des Radausrichtungssignals vom Prozessor an mindestens einen Aktuator des Fahrzeugs; und
Modifizieren mindestens einer Komponente des Fahrzeugs über den mindestens einen Aktuator basierend auf dem Radausrichtungssignal, was zu einer modifizierten Lenkgeometrie des Fahrzeugs führt.

11. Fahrzeug nach Anspruch 9, wobei das nichtflüchtige computerlesbare Speichermedium zusätzliche gespeicherte Anweisungen aufweist, die, wenn sie von dem Prozessor ausgeführt werden, den Prozessor veranlassen, Operationen durchzuführen, umfassend:
Anzeigen einer Benachrichtigung zum manuellen Ändern einer Lenkgeometrie des Fahrzeugs basierend auf dem Radausrichtungssignal.

12. Fahrzeug nach Anspruch 9, wobei die Fahrzeuginformationen umfassen:
eine Geschwindigkeit des Fahrzeugs;
Radgeschwindigkeiten des Fahrzeugs;
einen Lenkwinkel des Fahrzeugs;
eine Drosselklappe des Fahrzeugs;
einen Bremspedalstatus des Fahrzeugs;
Achslastdaten des Fahrzeugs;
GPS-Daten (Global Positioning System-Daten) des Fahrzeugs; und
Aufhängungsgelenkdaten des Fahrzeugs.

13. Fahrzeug nach Anspruch 9, wobei das maschinelle Lernmodell wie folgt generiert wird:
Durchführen einer Sensitivitätsanalyse, die Korrelationen zwischen bekannten Werten von Fahrzeugdaten, die den Fahrzeuginformationen zugeordnet sind, bekannten Werten von Lenkgeometriekomponenten, bekannten Fahrzyklen und bekannten Fahrzeuganwendungen identifiziert;
Bilden eines neuronalen Netzwerks unter Verwendung der Korrelationen über eine Rechenvorrichtung; und
Konvertieren des neuronalen Netzwerks über die Rechenvorrichtung in computerausführbaren Code, wodurch das maschinelle Lernmodell entsteht.

14. Fahrzeug nach Anspruch 9, wobei das mindestens eine Rückkopplungselement eine Genauigkeitsangabe von einem Fahrer des Fahrzeugs in Bezug auf vorherige Ausgaben des Verstärkungslernmodells umfasst.

15. Fahrzeug nach Anspruch 9, wobei das mindestens eine Rückkopplungselement einen Vergleich der tatsächlichen GPS-Daten mit früheren Ausgaben des Verstärkungslernmodells umfasst.

## Revendications

1. Procédé comprenant :
la réception, au niveau d'un processeur à bord d'un véhicule, d'informations de véhicule associées à un mouvement en cours du véhicule ;
l'exécution, par l'intermédiaire du processeur, d'un modèle d'apprentissage par renforcement, dans lequel :
des entrées du modèle d'apprentissage par renforcement comprennent :
les informations de véhicule ; et
au moins un élément de rétroaction, l'au moins un élément de rétroaction indiquant si une sortie précédente du modèle d'apprentissage par renforcement était correcte ;
des sorties du modèle d'apprentissage par renforcement comprennent :
un cycle de conduite actuel du véhicule ; et
une application actuelle du véhicule ;
l'exécution, par l'intermédiaire du processeur, d'un modèle d'apprentissage machine, dans lequel :
des entrées du modèle d'apprentissage machine comprennent :
les sorties du modèle d'apprentissage par renforcement ; et
les informations de véhicule ; et
une sortie du modèle d'apprentissage machine comprend un signal d'alignement des roues.

2. Procédé selon la revendication 1, comprenant en outre :
la transmission, du processeur à au moins un actionneur du véhicule,
du signal d'alignement des roues ; et
la modification, par l'intermédiaire de l'au moins un actionneur sur la base du signal d'alignement des roues, d'au moins un composant du véhicule, entraînant un angle de braquage en virage modifié du véhicule.

3. Procédé selon la revendication 1, comprenant en outre :
l'affichage d'une notification afin de modifier manuellement un angle de braquage en virage du véhicule sur la base du signal d'alignement des roues.

4. Procédé selon la revendication 1, dans lequel les informations de véhicule comprennent :
une vitesse du véhicule ;
des vitesses de roue du véhicule ;
un angle de braquage du véhicule ;
un accélérateur du véhicule ;
un état de pédale de frein du véhicule ;
des données de charge par essieu du véhicule ;
des données de GPS (Système mondial de localisation) du véhicule ; et
des données d'articulation de la suspension du véhicule.

5. Procédé selon la revendication 1, dans lequel le modèle d'apprentissage machine est généré par :
réalisation d'une analyse de sensibilité qui identifie des corrélations entre des valeurs connues de données de véhicule associées aux informations de véhicule, des valeurs connues de composant d'angle de braquage en virage, des cycles de conduite connus, et des applications de véhicule connues ;
formation, par l'intermédiaire d'un dispositif informatique, d'un réseau neuronal à l'aide des corrélations ; et
conversion, par l'intermédiaire du dispositif informatique, du réseau neuronal en code exécutable par ordinateur, entraînant le modèle d'apprentissage machine.

6. Procédé selon la revendication 1, dans lequel l'au moins un élément de rétroaction comprend une indication de précision à partir d'un conducteur du véhicule concernant des sorties précédentes du modèle d'apprentissage par renforcement.

7. Procédé selon la revendication 1, dans lequel l'au moins un élément de rétroaction comprend une comparaison de données GPS réelles avec des sorties précédentes du modèle d'apprentissage par renforcement.

8. Procédé selon la revendication 1, dans lequel le cycle de conduite actuel du véhicule comprend l'un parmi :
un cycle de conduite transitoire ; et
un cycle de conduite modal.

9. Véhicule comprenant :
un processeur ;
une pluralité de capteurs ;
un support de stockage lisible par ordinateur non transitoire contenant des instructions stockées qui, lorsqu'elles sont exécutées par le processeur, amènent le processeur à effectuer des opérations comprenant :
la réception, à partir de la pluralité de capteurs, d'informations de véhicule associées à un mouvement en cours du véhicule ;
l'exécution d'un modèle d'apprentissage par renforcement, dans lequel :
des entrées du modèle d'apprentissage par renforcement comprennent :
les informations de véhicule ; et
au moins un élément de rétroaction, l'au moins un élément de rétroaction indiquant si une sortie précédente du modèle d'apprentissage par renforcement était correcte ;
des sorties du modèle d'apprentissage par renforcement comprennent :
un cycle de conduite actuel du véhicule ; et
une application actuelle du véhicule ;
l'exécution d'un modèle d'apprentissage machine, dans lequel :
des entrées du modèle d'apprentissage machine comprennent :
les sorties du modèle d'apprentissage par renforcement ; et
les informations de véhicule ; et
une sortie du modèle d'apprentissage machine comprend un signal d'alignement des roues.

10. Véhicule selon la revendication 9, comprenant en outre :
au moins un actionneur associé à l'alignement des roues du véhicule, et
dans lequel le support de stockage lisible par ordinateur non transitoire stocke des instructions supplémentaires qui, lorsqu'elles sont exécutées par le processeur, entraînent des opérations comprenant :
la transmission, à partir du processeur à l'au moins un actionneur du véhicule, du signal d'alignement des roues ; et
la modification, par l'intermédiaire de l'au moins un actionneur sur la base du signal d'alignement des roues, d'au moins un composant du véhicule, entraînant un angle de braquage en virage modifié du véhicule.

11. Véhicule selon la revendication 9, le support de stockage lisible par ordinateur non transitoire contenant des instructions supplémentaires stockées qui, lorsqu'elles sont exécutées par le processeur, amènent le processeur à effectuer des opérations comprenant :
l'affichage d'une notification afin de modifier manuellement un angle de braquage en virage du véhicule sur la base du signal d'alignement des roues.

12. Véhicule selon la revendication 9, dans lequel les informations de véhicule comprennent :
une vitesse du véhicule ;
des vitesses de roue du véhicule ;
un angle de braquage du véhicule ;
un accélérateur du véhicule ;
un état de pédale de frein du véhicule ;
des données de charge par essieu du véhicule ;
des données de GPS (Système mondial de localisation) du véhicule ; et
des données d'articulation de la suspension du véhicule.

13. Véhicule selon la revendication 9, dans lequel le modèle d'apprentissage machine est généré par :
réalisation d'une analyse de sensibilité qui identifie des corrélations entre des valeurs connues de données de véhicule associées aux informations de véhicule, des valeurs connues de composant d'angle de braquage en virage, des cycles de conduite connus, et des applications de véhicule connues ;
formation, par l'intermédiaire d'un dispositif informatique, d'un réseau neuronal à l'aide des corrélations ; et
conversion, par l'intermédiaire du dispositif informatique, du réseau neuronal en code exécutable par ordinateur, entraînant le modèle d'apprentissage machine.

14. Véhicule selon la revendication 9, dans lequel l'au moins un élément de rétroaction comprend une indication de précision à partir d'un conducteur du véhicule concernant des sorties précédentes du modèle d'apprentissage par renforcement.

15. Véhicule selon la revendication 9, dans lequel l'au moins un élément de rétroaction comprend une comparaison de données GPS réelles avec des sorties précédentes du modèle d'apprentissage par renforcement.
